# EUROPÄISCHE PATENTANMELDUNG

(11) **EP 1 674 201 A1**
(43) Veröffentlichungstag der Anmeldung: **28.06.2006**
(21) Anmeldenummer: 05028313.4
(22) Anmeldetag: 23.12.2005
(51) Int. Cl.: B23Q 17/22, B27C 1/14, B23Q 3/18

(54) **Einstellvorrichtung**

(30) Priorität: 23.12.2004 DE 102004063425
(71) Anmelder: Otto Martin Maschinenbau GmbH & Co., 87724 Ottobeuren (DE)
(72) Erfinder: Martin, Peter, D-87700 Memmingen (DE)
(74) Vertreter: Pfister, Stefan Helmut Ulrich

(57) **Zusammenfassung**

Die Erfindung betrifft eine Einstellvorrichtung zur Einstellung der Maße von durch Stellmitteln einstellbaren Elementen einer Bearbeitungsmaschine (10), insbesondere einer Holzbearbeitungsmaschine. Die Einstellvorrichtung (1) weist eine Steuerung (7) sowie ein Stellelement auf, wobei das Stellelement durch ein Verbindungselement auf das Stellmittel des Elementes einzuwirken vermag

## Beschreibung

Die Erfindung betrifft eine Einstellvorrichtung zur Einstellung der Maße von durch Stellmittel einstellbaren Elementen einer Bearbeitungsmaschine, insbesondere einer Holzbearbeitungsmaschine. Die Erfindung betrifft auch eine Bearbeitungsmaschine, insbesondere eine Holzbearbeitungsmaschine, welche mindestens ein durch ein Stellelement einstellbares Element aufweist. Die Erfindung betrifft weiterhin ein Verfahren zur Einstellung bzw. Verstellung der Stellmittel einer Bearbeitungsmaschine, wobei die Einstellung anhand von in einer Steuerung speicherbaren, einlesbaren, hinterlegbaren bzw. hinterlegten und von dort abrufbaren Einstellwerten bzw. Programmen erfolgt.

Aus dem Stand der Technik ist es bekannt, vor einem Ver- oder Bearbeitungsvorgang die Achsen von Bearbeitungsmaschinen auf eine definierte Position einzustellen. Dazu sind gegenwärtig im wesentlichen zwei Arbeitsweisen bekannt.

In einer ersten Variante nach dem Stand der Technik werden die Achsen manuell mittels Kurbeln, Steckschlüsseln oder ähnlichem nach Zählern an der Bearbeitungsmaschine bzw. an der jeweiligen Achse eingestellt. Jede Achse weist dabei einen fest angebrachten, mechanischen oder elektronischen Zähler auf. Zur Herstellung einer definierten Einstellung muß der Bediener die Achsen manuell auf vordefinierte Zählerwerte einstellen. Diese vordefinierten Zählerwerte wurden im allgemeinen bei einer früheren Durchführung genau dieses Arbeitsvorganges vom Bediener aufnotiert und dann wieder verwendet. Dieses Verfahren ist zwar günstig in der Anschaffung aber aufwendig durch die manuelle Tätigkeit des Bedieners sowie sehr fehleranfällig in der Ausführung. Diese Fehler resultieren aus Einstellungsfehlern der Bedienperson bzw. fehlerhafter Notierung von Werten oder dergleichen.

In einer weiteren Variante des Standes der Technik werden die Achsen von einer Zentralsteuerung mittels Positionierantrieben positioniert. An jeder Achse sitzt dabei ein Positionsgeber und ein Motor, der von der Zentralsteuerung angesteuert wird. Vorherige Einstellungen können meist über Programme bzw. aus Datenspeichern direkt von der Steuerung reproduziert werden. Komplette Einstellungen können damit gespeichert und wieder aufgerufen werden. Dieses Verfahren ermöglicht eine sehr schnelle und fehlerunanfällige Einstellung von sehr vielen Achsen, bedingt aber sehr hohe Anschaffungskosten durch zahlreiche Positionierantriebe und Positionsgeber.

Ausgehend von diesem Stand der Technik ist es Aufgabe der Erfindung, eine Einstellvorrichtung zur Verfügung zu stellen, mittels derer zahlreiche einstellbare Elemente, wie z.B. Achsen einer Bearbeitungsmaschine kostengünstig, schnell und fehlerunanfällig eingestellt werden können. Aufgabe der Erfindung ist es auch, eine entsprechende Bearbeitungsmaschine zur Verfügung zu stellen. Aufgabe der Erfindung ist es weiter, ein entsprechendes Verfahren zur Einstellung dieser Elemente zur Verfügung zu stellen.

Die Erfindung geht von dem zuvor beschriebenen Stand der Technik aus und schlägt eine Einstellvorrichtung zur Einstellung der Maße von durch Stellmittel einstellbaren Elementen einer Bearbeitungsmaschine, insbesondere einer Holzbearbeitungsmaschine vor, wobei die Einstellvorrichtung eine Steuerung sowie ein Stellelement aufweist, und das Stellelement durch ein Verbindungselement auf das Stellmittel des Elementes einzuwirken vermag. Als einstellbare Elemente sind z.B. Achs- bzw. Spindelpositionen, Positionen von Werkzeugen, Anschlägen, Bearbeitungstischen oder dergleichen, zu verstehen. Der Vorteil der erfindungsgemäßen Lösung ist darin zu sehen, daß sich die Bearbeitungsmaschine aufgrund der Einstellvorrichtung zur Einstellung der Maße von durch Stellmittel einstellbaren Elementen einer Bearbeitungsmaschine jetzt wesentlich günstiger herstellen läßt. Die Einstellung der Elemente, wie Achs- bzw. Spindelpositionen bzw. der Positionen von Werkzeugen, Anschlägen, Bearbeitungstischen und dergleichen, kann trotz der Einsparung der Positionierantriebe an der Bearbeitungsmaschine im wesentlichen automatisch, zumindest jedoch halbautomatisch erfolgen. Auch ein händisches Einstellen bzw. Nachjustieren ist möglich, wobei die gleichen Genauigkeitsanforderungen erfüllt werden, wie dies bei einem automatischen Verfahren gegeben ist, da die Steuerung ja jeweils erkennt, ob der korrekte Wert, welcher aufgerufen wurde, eingestellt ist. Damit genügt die Einstellvorrichtung mit dem später noch zu beschreibenden erfindungsgemäßen Verfahren, insbesondere solchen Ansprüchen, bei denen Bearbeitungsmaschinen zum Einsatz kommen, die keine Positionierantriebe bzw. nicht an allen Einstellelementen Positionierantriebe aufweisen. Damit lässt sich die Bearbeitungsmaschine selbst äußerst kostengünstig herstellen, da die Positionierantriebe und die entsprechenden Positionsgeber jeweils nicht erforderlich sind. Die Bearbeitungsmaschine läßt sich trotzdem mit hoher Genauigkeit und relativ schnell durch das Anschließen der Einstellvorrichtung und damit ebenfalls automatisches Einstellen mit höchster Genauigkeit justieren.

Gegenüber der händischen Verfahrensweise besitzt die Lösung nach der Erfindung den Vorteil, daß erstens die Einstellungen der einzelnen Achs- bzw. Werkzeug- oder Anschlagpositionen sehr genau und dennoch automatsich bzw. halbautomatisch erfolgen kann. Der Zeitaufwand bezogen auf die Einstellung jeder Achse und bezogen auf eine Bearbeitungsmaschine mit mehreren Achspositionen wird hier wesentlich minimiert. Einstellfehler durch die Bedienperson bzw. durch fehlerhafte Eingaben können komplett vermieden werden, da durch die Steuerung der Einstellvorrichtung gleichzeitig abgeglichen wird, ob die eingestellte Achsposition dem Wert entspricht, der vorher ausgewählt wurde. Damit wird eine Lösung zur Verfügung gestellt, die es erlaubt, sehr kostengünstig an Bearbeitungsmaschinen die Einstellung der einstellbaren Elemente nach der Definition der Erfindung vorzunehmen. Die Einstellvorrichtung wird zur Realisierung des Einstellvorganges an dem jeweiligen Stellelement angeschlossen, dann der jeweilige Wert oder das jeweilige Programm aufgerufen und anschließend die Einstellung automatisch vorgenommen. Durch Sichtkontrolle und/oder Kontrolle an vorhandenen Meßanordnungen kann anschließend überprüft werden, ob die Einstellung korrekt vorgenommen wurde. Gegebenenfalls ist ein händisches Nachjustieren durch Eingabe an der Steuerung bzw. deren Eingabegeräten oder aber durch händisches Nachrichten möglich. Die Verbindungselemente sind beispielsweise durch Verbindungskupplungen oder dergleichen angegeben. Diese Verbindungselemente sind dabei leicht lösbar und vor allem an vorhandenen Bearbeitungsmaschinen nachrüstbar. Damit wird nicht nur für neu zu produzierende Bearbeitungsmaschinen eine günstige Lösung in Form der Einstellvorrichtung und des damit durchzuführenden Verfahrens zur Verfügung gestellt, sondern auch eine Möglichkeit, um vorhandene Bearbeitungsmaschinen, die nicht mit Positionierantrieben ausgerüstet sind, entsprechend nachzurüsten. Es wird auch ein System zur Einstellung mit entsprechenden Verbindungselementen zur Verfügung gestellt, daß es über das Zusammenwirken autarker Elemente mit der Einstellvorrichtung ermöglicht, diese universell an verschiedenen Bearbeitungsmaschinen an verschiedenen Positionen einzusetzen.

Eine Weiterbildung der Erfindung zeichnet sich dadurch aus, daß das Stellelement linear oder rotatorisch wirkt. So ist es beispielsweise möglich, einen Linearmotor einzusetzen, der die Spindelposition oder Achsposition linear zu ändern vermag.

Eine andere Variante der Erfindung sieht auch vor, daß das Stellelement als durch einen Motor angetriebene Stellwelle ausgebildet ist. Diese Stellwelle wird dann in eine Drehbewegung versetzt. Die Drehbewegung wird von einem an der Bearbeitungsmaschine vorhandenen Mechanismus gegebenenfalls in eine lineare Bewegung umgewandelt.

Eine Einstellvorrichtung, wie zuvor beschrieben, zeichnet sich entsprechend einer vorteilhaften Weiterbildung der Erfindung dadurch aus, daß die Einstellvorrichtung selbst portabel ist. Damit ist die Einstellvorrichtung universell nicht nur an einer Achse und an einer Bearbeitungsmaschine, sondern an verschiedensten Achspositionen beziehungsweise einstellbaren Elementen einer Bearbeitungsmaschine aber auch an mehreren Bearbeitungsmaschinen einsetzbar. Es reicht jetzt eine einzigste Einstellvorrichtung aus, um alle einzustellenden Positionen beziehungsweise einstellbaren Elemente einer Bearbeitungsmaschine nacheinander durch jeweiliges Ankoppeln der Einstellvorrichtung an das jeweilige einstellbare Element zu justieren beziehungsweise einzustellen. Mit der erfindungsgemäßen Vorrichtung ist es auch möglich, bestimmte Einstellwerte, die beispielsweise erstmalig eingestellt werden, zu speichern und in der Steuerung der Einstellvorrichtung zu hinterlegen oder aber diese in einem anderen geeigneten Datenspeicher zu speichern.

Erfindungsgemäß ist es entsprechend einer weiteren Ausführungsform der Erfindung vorgesehen, daß die Einstellvorrichtung an das jeweilige Element anschließbar ist, um im Bedarfsfall das Maß einzustellen und/oder zu kontrollieren. Damit ist neben der Portabilität die nächste Komponente erfüllt, daß die Einstellvorrichtung universell an jeweilige Elemente anschließbar ist. Die universelle Anschließbarkeit ist dabei durch verschiedenste technische Mittel möglich. Hierzu werden nur beispielhaft Kupplungen, Schnellkupplungen, Schrauben-Mutter-Verbindungen, Nut-und Federverbindungen, Keilverbindungen oder dergleichen genannt. Die Einstellvorrichtung ist nun an das jeweilige einzustellende Element anschließbar. Mit der Einstellvorrichtung lassen sich dann sowohl Maße einstellen als auch kontrollieren. Selbstverständlich lassen sich auch erstmalig eingestellte und noch nicht im Speicher hinterlegte Werte dann speichern.

Der Motor ist entsprechend einer weiteren Variante der Erfindung mit wenigstens einer ersten Meßanordnung, bevorzugt einem ersten Drehgeber verbunden beziehungsweise wirkt mit diesem zusammen. Der Drehgeber bestimmt dabei die jeweils durchzuführende Dreh- beziehungsweise Einstellbewegung. Dazu wirkt er vorteilhafterweise mit der Steuerung zusammen beziehungsweise ist mit der Steuerung verbunden.

Die Einstellvorrichtung nach der Erfindung zeichnet sich auch dadurch aus, daß entsprechend einer weiteren Ausführungsform der Erfindung die Steuerung aufgrund der Information der ersten Meßanordnung bwz. des Drehgebers und der Steigung der als Stellspindel ausgebildeten Stellmittel die Positionsdaten ermittelt. Dabei kann die Steuerung lediglich eine Einstellung erfassen. Sie kann aber auch gleichzeitig eine Mehrzahl von Positionsdaten ermitteln, die sich aus der oder den Informationen des Drehgebers ergeben. Die Positionsdaten werden dabei als Daten gemessen bzw. erfasst und im umgekehrten Weg als Maße eingestellt.

Erfindungsgemäß ist eine Einstellvorrichtung in einer Weiterbildung auch mit einem Getriebe versehen, welches vorzugsweise an den Motor angeflanscht ist und zur Einstellung beziehungsweise Regelung der Drehgeschwindigkeit für den Einstellvorgang dient. Die Ausgestaltung des Getriebes selbst ist dabei untergeordnet. Die Einschränkung auf ein spezielles Getriebe ist nicht vorgesehen. Vielmehr sind alle zur Einstellung beziehungsweise Regelung der Drehgeschwindigkeit geeigneten Getriebe möglich.

Bevorzugt ist es entsprechend einer weiteren Ausführungsform der Erfindung, daß die Steuerung, die erste Meßanordnung bzw. der erste Drehgeber, der Motor sowie das Getriebe in einem Gehäuse angeordnet sind. Damit läßt sich die gesamte Einstellvorrichtung wesentlich einfacher handhaben und insbesondere transportieren. Das Gehäuse ist bevorzugt griffig, leicht und damit die Einstellvorrichtung insgesamt leicht zu handhaben. Die gesamte Einstellvorrichtuntg ist bevorzugt möglichst klein, kompakt und leicht gebaut sowie griffgünstig ausgestaltet.

Die Einstellvorrichtung verfügt entspechend einer Weiterbildung auch über eine Schnittstelle mit der Zentralsteuerung der Bearbeitungsmaschine beziehungsweise zu einer zentralen EDV-Anlage, einem Computer oder dergleichen. Über diese Schnittstelle ist die Einstellvorrichtung mit der Zentralsteuerung oder den anderen genannten Steuerungsmöglichkeiten verbindbar. Daten sind von dort abrufbar oder im Umkehrschluß dort speicherbar.

Ein weiterer Aspekt der Erfindung ist dadurch angegeben, daß die Schnittstelle in der Steuerung vorgesehen ist und die Steuerung mit der Zentralsteuerung drahtlos oder drahtgebunden verbindbar ist. Bei einer drahtlosen Verbindung ist es dann notwendig, daß eine Stromquelle in der Steuerung beziehungsweise in der Einstellvorrichtung vorgesehen ist. Die Stromquelle kann dabei beispielsweise durch einen Akkumulator, eine Batterie oder dergleichen angegeben sein. Selbstverständlich ist es auch möglich, für die Energieversorgung der drahtlosen Verbindung mit der Zentralsteuerung die Elektroenergie für den Antriebsmotor zu verwenden. Dazu sind gegebenenfalls Transformatoren vorzusehen, die die jeweilig notwendige Spannung einstellen.

Von Vorteil ist es auch, wenn das Verbindungselement von dem Stellelement leicht lösbar ausgebildet ist. Zwar muß eine sichere Drehmomentübertragung gewährleistet sein. In gleicher Weise ist es aber für den Bedienkomfort wichtig, daß das Verbindungselement von dem Stellelement leicht lösbar ausgebildet ist. Dies kann beispielsweise durch Schnellkupplungen, Nut- und Federverbindungen oder aber durch einen Sechskantzapfen und eine entsprechende Mutter realisiert werden.

Demnach ist entsprechend einer Weiterbildung der Erfindung das Verbindungselement zur Verbindung der Vorrichtung mit dem Stellmittel durch einen Einstellzapfen angegeben, der mit einem an der Bearbeitungsmaschine vorgesehenen Verbindungsgegenstück, insbesondere einer Antriebsmutter, zusammenwirkt.

Ein weiterer Aspekt der Erfindung ist dadurch angegeben, daß das Verbindungselement durch eine Kupplung, insbesondere eine Schnellkupplung, wie zuvor beschrieben, angegeben ist, die mit einem Kupplungsstück an der Bearbeitungsmaschine zusammenwirkt. Sowohl die zuvor beschriebene Antriebsmutter als auch das Kupplungsstück lassen sich ein einfacher Weise auch an vorhandenen Bearbeitungsmaschinen nachrüsten, die noch nicht über derartige Verbindungselemente verfügen.

Die Steuerung der erfindungsgemäßen Einstellvorrichtung ist entsprechend einer weiteren Variante der Erfindung mit einer zweiten Meßanordnung, z.B. einem zweiten Drehgeber verbunden, der an dem Stellmittel der Bearbeitungsmaschine vorgesehen ist und der mit diesem Stellmittel zusammenzuwirken vermag. Damit wird die gesamte Einstellvorrichtung noch universeller. Ist z.B. die Bearbeitungsmaschine mit einem solchen zweiten Drehgeber ausgestattet, können verschiedene, später noch zu beschreibende Einstellungsvarianten realisiert werden. Weiterhin wäre es möglich, bei der Ausrüstung der Bearbeitungsmaschine mit dem zweiten Drehgeber auf den ersten Drehgeber der Einstellvorrichtung selbst zu verzichten, um diese noch kostengünstiger zu gestalten.

Die Einstellvorrichtung nach der Erfindung zeichnet sich entsprechend einer Weiterbildung auch dadurch aus, daß in der Steuerung ein Datenspeicher für die Maße der einzelnen Elemente und/oder Bearbeitungsvorgänge, Programme bzw. Varianten vorgesehen ist. Damit wird die Einstellvorrichtung selbst von einer Zentralsteuerung der Bearbeitungsmaschine oder einer zentralen EDV-Anlage einem außenstehenden Speicher in Form eines Computers, beispielsweise unabhängig. Die Steuerung bzw. der Datenspeicher der Steuerung ist dann in der Lage, die entsprechenden Daten entweder durch Einlesen oder durch Einstellen zu speichern. Einmal vorgenommene Einstellungen können dann aus dem Datenspeicher wieder abgerufen und zur Einstellung verwendet werden.

Als einstellbare Elemente sind nach der Erfindung Achspositionen, Werkzeuge, Anschläge, Lineale, Bearbeitungstische bzw. deren Positionen oder dergleichen vorgesehen.

Die erfindungsgemäße Einstellvorrichtung zeichnet sich nach einer vorteilhaften Weiterbildung dadurch aus, daß die Werte der Elemente durch die Einstellvorrichtung bzw. die Steuerung von der Zentralsteuerung der Bearbeitungsmaschine abrufbar und gegebenenfalls speicherbar sind. Dadurch lassen sich in der Zentralsteuerung bereits hinterlegte Werte abrufen und für spätere Einstellvorgänge auch in der Steuerung der Einstellvorrichtung speichern.

Neue eingestellte Werte können in umgekehrter Weise selbstverständlich auch in der Steuerung hinterlegt bzw. an die Zentralsteuerung zur Speicherung gesendet werden.

In einer Variante der Erfindung ist das Stellmittel durch die Spindel der Bearbeitungsmaschine angegeben. Damit lassen sich die Spindelpositionen entsprechend einstellen bzw. justieren.

Die Einstellvorrichtung nach der Erfindung zeichnet sich auch dadurch aus, daß ein Bedienfeld vorgesehen ist, über das die Vorrichtung bedient wird bzw. steuerbar ist.

Das Bedienfeld ist dabei vorteilhafterweise mit Anzeige und/oder Stellfeldern versehen.

Von besonderem Vorteil ist es, durch das Bedienfeld eine Umschaltmöglichkeit der Anzeige zwischen Absolut- und Inkrementalanzeige besitzt. Diese Umschaltmöglichkeit ist unter anderem sehr nützlich für manuelle Korrekturen, die unter Einbezug der Meßanordnungen in Form des Drehgebers vorgenommen werden sollen bzw. können. Selbstverständlich ist die Erfindung auf diese Variante nicht eingeschränkt. Vielmehr lässt sich die Umschaltung zwischen Absolut- und Inkrementalanzeige auch für andere Einstellungsvarianten nutzen bzw. für die für den Bediener am günstigsten erscheinende Variante.

Die erfindungsgemäße Einstellvorrichtung weist entsprechend einer Weiterbildung auch eine Positionierhilfe auf, über die diese an der Bearbeitungsmaschine bzw. an einem definierten Element feststellbar ist.

Diese Positionierhilfe ist beispielsweise durch einen vorzugsweise leicht kegelförmig ausgebildeten Zapfen angegeben, der mit einer korrespondierend dazu ausgebildeten Ausformung an der Bearbeitungsmaschine bzw. an dem definierten Element zusammenwirken vermag.

Der Zapfen ist vorteilhafterweise derart ausgebildet, daß er gleichzeitig der Kraft- bzw Drehmomentabstützung für den Einstellvorgang dient.

Die Positionierhilfe ist dabei nicht nur auf einen Zapfen mit entsprechender korrespondierender Ausnehmung beschränkt. Vielmehr sind andere, beispielsweise form- und/oder reibschlüssige Verbindungen, wie Nut- und Federverbindungen, Reibflächen oder dergleichen für eine exakte Koppelung der Kraft- bzw. Drehmomentabstützung angegeben.

Ein weiterer Aspekt der erfindungsgemäßen Einstellvorrichtung ist dadurch angegeben, daß ein Fixiermechanismus vorgesehen ist, der die Einstellvorrichtung während des Einstellvorganges mit der Bearbeitungsmaschine bzw. dem einzustellenden Element fest, zumindest während des Einstellvorganges unlösbar verbindet. Dabei ist es günstig, wenn dieser Fixiermechanismus unabhängig von dem Handeln der Bedienperson funktioniert.

So ist es beispielsweise vorgesehen, daß der Fixiermechanismus durch magnetisch bzw. form- oder reibschlüssig wirkende Mittel, wie z.B. Magnetspulen, ausfahrbare Zapfen bzw. Bolzen, drehbare Schlüssel, Keilklemmung oder dergleichen, angegeben ist.

An der erfindungsgemäßen Einstellvorrichtung ist es entsprechend einer weiteren Variante auch vorgesehen, daß Identifizierungsmittel vorhanden sind, mittels derer die Einstellvorrichtung das Element zu erkennen vermag. Dazu ist beispielsweise an der Einstellvorrichtung ein Lesegerät für das Identifizierungsmittel vorgesehen, welches mit der Steuerung verbunden ist. Dabei sind als Identifizierungsmittel beispielsweie ein Barcode, ein Nummerncode oder ein Transponder vorgesehen.

Entsprechend einer Weiterbildung der Erfindung sind an der Zylinderfläche der Antriebsmutter in unregelmäßigen Abständen mehrere Markierungen angebracht. Diese Markierungen werden mittels eines im Zapfen untergebrachten Sensors abgetastet. Demzufolge zeichnet sich eine Weiterbildung der erfindungsgemäßen Einstellvorrichtung dadurch aus, daß in dem Zapfen 16 ein Sensor vorgesehen ist.

Bei einer weiteren Variante der Erfindung ist es möglich, auf die erste Meßanordnung, z.B. in Form des ersten Drehgebers zu verzichten, wenn die Bearbeitungsmaschine entsprechend technisch ausgestaltet ist. Dazu ist eine entsprechende Übertragungsgeschwindigkeit einer drahtgebundenen Verbindung zwischen Steuerung und Zentralsteuerung beispielsweise notwendig. Der Vorteil dieser Variante besteht in der Möglichkeit, schnelle Korrekturen durch eine direkt an die Antriebsmutter ankoppelbare Kurbel vornehmen zu können, wobei die geänderte Position dann durch die zweite Meßanordnung bzw. den zweiten Drehgeber der Steuerung bzw. der Zentralsteuerung zur Verfügung gestellt wird.

Eine vorteilhafte Weiterbildung der erfindungsgemäßen Einstellvorrichtung zeichnet sich auch dadurch aus, daß das Stellelement als Stellspindel oder als auf einer Führung geführter Schlitten ausgebildet ist. Damit ist klar, daß die Ausbildung des Stellelementes nicht auf eine Stellspindel eingeschränkt ist, sondern vielmehr auch andere Varianten durch die erfindungsgemäße Einstellvorrichtung umfasst werden.

Die Erfindung betrifft auch eine Bearbeitungsmaschine, insbesondere Holzbearbeitungsmaschine, welche mindestens ein durch ein Stellelement einstellbares Element aufweist, wobei das Stellelement ein Verbindungsgegenstück aufweist, welches mit dem Verbindungselement einer Einstellvorrichtung, wie zuvor beschrieben, zusammenzuwirken vermag.

Dadurch wird eine Bearbeitungsmaschine zur Verfügung gestellt, die insbesondere sehr kostengünstig durch den Verzicht auf die Positionierantriebe hergestellt werden kann. Damit ist es möglich, kostengünstig derartige Bearbeitungsmaschinen herzustellen und zu vertreiben, ohne einen Verzicht auf die universelle Einstellbarkeit und insbesondere automatische Einstellbarkeit der jeweilig einzustellenden Elemente.

Das Verbindungsgegenstück ist entsprechend einer Variante der erfindungsgemäßen Bearbeitungsmaschine am Kopf der Stellspindel vorgesehen. Dabei ist es günstig, wenn das Verbindungsgegenstück durch eine mit der Spindel verbundene Antriebsmutter angegeben ist, die mit dem Einstellzapfen der Einstellvorrichtung zusammenwirkt. Erfindungsgemäß ist entsprechend einer Variante der erfindungsgemäßen Bearbeitungsmaschine eine Spindelmutter vorgesehen, mittels derer die Elementposition einstellbar bzw. verstellbar ist.

Eine weitere Variante der Erfindung sieht vor, daß eine zweite Meßanordnung in Form eines zweiten Drehgebers an dem Stellmittel, insbesondere der Stellspindel vorgesehen ist, bevorzugt an der gegenüberliegenden Seite der Stellspindel, die das Verbindungsgegenstück trägt.

Die Erfindung zeichnet sich auch dadurch aus, daß Identifizierungsmittel vorgesehen sind, die bevorzugt durch einen Datenträger, insbesondere Transponder angegeben ist, der z.B. unmittelbar an bzw. neben der Achse bzw. der an der Achse vorgesehenen Antriebsmutter angeordnet ist und der mit dem Lesegerät bzw. einem entsprechenden Empfänger an bzw. in der Einstellvorrichtung, wie zuvor beschrieben, zusammenwirkt.

An der Antriebsmutter sind entsprechend einer Weiterbildung der Erfindung, wie bereits bei der Einstellvorrichtung kurz erwähnt, Markierungen an der Antriebsmutter vorgesehen. Diese Markierungen sind dabei in unregelmäßigen Abständen insbesondere mehrfach angeordnet. Diese Markierungen an der Antriebsmutter dienen dazu, daß ein in der Einstellvorrichtung vorhandener Sensor z.B. an oder in dem Zapfen die Markierungen erkennt und an die Steuerung weiterleitet. Beim Überfahren von zwei Markierungen mit dem Drehgeber wird dadurch eine eindeutige Erkennbarkeit der Winkelstellung der Antriebsmutter erhalten. Die Steuerung der Einstellvorrichtung bzw. die Zentralsteuerung ist damit in der Lage, Summenfehler, geringe Eigenbewegungen der Antriebsmutter zu korrigieren. Bevorzugt ist es dabei, wenn die Eigenbewegungen der Antriebsmutter deutlich unter einer halben Umdrehung bleiben, was in der Praxis auch gegeben ist. Dadurch ist es möglich, auf die zweite Meßanordnung, z.B. den zweiten Drehgeber bei einer derartigen Ausgestaltung zu verzichten. Erfindungsgmäß ist es ebenalls vorgesehen, entsprechend einer Weiterbildung der Bearbeitungsmaschine eine Kurbel an der Antriebsmutter anzuordnen. Ein Vorteil diese Variante ist die bereits beschriebene Möglichkeit, schnelle Korrekturen durch eine direkt an der Antriebsmutter angekoppelte Kurbel vornehmen zu können, wobei die geänderte Position de Zentralsteuerung durch den zweiten Drehgeber dann zur Verfügung gestellt wird.

Die Erfindung stellt auch ein Verfahren zur Einstellung bzw. Verstellung des Maßes bzw. der Position von Elementen einer Bearbeitungsmaschine, insbesondere einer Bearbeitungsmaschine, wie zuvor beschrieben, zur Verfügung, wobei die. Einstellung anhand von in einer Steuerung speicherbaren, einlesbaren, hinterlegbaren bzw. hinterlegten und von dort abrufbaren Einstellwerten bzw. Programmen erfolgt, welches sich dadurch auszeichnet, daß eine von der Bearbeitungsmaschine trennbare Einstellvorrichtung, insbesondere eine Einstellvorrichtung, wie vorhergehend beschrieben, an die Bearbeitungsmaschine angeschlossen, ein Programm bzw. entsprechende Einstellwerte ausgewählt und von der Steuerung aufgerufen wird bzw. werden und die Einstellvorrichtung anschließend die ausgewählte Position des Elementes einstellt. Mit diesem Verfahren ist es möglich, auch Einstellungen an Bearbeitungsmaschinen maschinell vorzunehmen, die keine Positionierantriebe aufweisen. Es ist lediglich notwendig, daß eine von der Bearbeitungsmaschine trennbare Einstellvorrichtung, wie z.B. eine Einstellvorrichtung nach der Erfindung, vorhanden sein muß, um die Position von Elementen einer Bearbeitungsmaschine einzustellen bzw. zu verändern. Auch ist eine Neueinstellung, Justierung und Speicherung in einem derartigen Verfahren möglich. Dies wird nachfolgend noch beschrieben. Erforderlich ist lediglich eine Verbindung zwischen der Bearbeitungsmaschine und der Einstellvorrichtung, die zueinander korrespondierend ausgestaltet werden müssen. Dies wurde jedoch bei der Einstellvorrichtung vorstehend bereits ausführlich erläutert, so daß hierauf nicht nochmals Bezug genommen wird. Durch das erfindungsgemäße Verfahren ist es ebenfalls kostengünstig möglich, Bearbeitungsmaschinen mit verschiedensten Einstellelementen, wie Achs- bzw. Spindelpositionen, Position von Anschlägen oder Linealen oder dergleichen, einzustellen bzw. zu justieren.

Ein Verfahren, wie zuvor beschrieben, zeichnet sich entsprechend einer Weiterbildung dadurch aus, daß durch die Einstellvorrichtung zunächst die Position bzw. das Maß eines ersten Elementes einstellbar ist, hernach die Einstellvorrichtung an dem ersten Element ab- und an einem zweiten Element angebaut wird, um auch die Postition bzw. das Maß des zweiten Elementes einzustellen. Auf diese Weise ist es möglich, nacheinander eine Vielzahl von Elementen einzustellen. Selbstverständlich ist es nach der Erfindung nicht ausgeschlossen, zwei oder mehrere derartige Einstellvorrichtungen, falls vorhanden, an einer Bearbeitungsmaschine zu positionieren, um damit entsprechend viele Elemente gleichzeitig einzustellen. Dies könnte beispielsweise in größeren Einrichtungen mit mehreren Bearbeitungsmaschinen gegeben sein, wo sich dann die Anschaffung mehrerer Einstellvorrichtungen finanziell lohnen würde.

Eine Weiterbildung der Verfahren, wie zuvor beschrieben, zeichnet sich dadurch aus, daß die Einstellvorrichtung bzw. deren Steuerung mit der Zentralsteuerung der Bearbeitungsmaschine kabelgebunden oder kabellos verbunden ist, das Programm bzw. die Einstellwerte von dort ausgewählt und übernommen wird bzw. werden, und anschließend die Einstellvorrichtung die gewünschte Position einstellt. Damit gelingt es, in einfacher Weise in der Zentralsteuerung der Bearbeitungsmaschine bereits vorhandene hinterlegte Programme oder Einstellwerte zu verwenden, ohne daß eine Neueinstellung durch die Einstellvorrichtung notwendig ist. Die Einstellvorrichtung ist dabei derart ausgebildet, daß sie diese Werte nicht nur für den einmaligen Einstellvorgang übernehmen kann, sondern auch gegebenenfalls in einer eigenen Steuerung bzw. deren Speicher diese Werte speichert.

Ein Verfahren, wie zuvor beschrieben, ist in einer Ausgestaltung dadurch gekennzeichnet, daß die Einstellvorrichtung bzw. deren Steuerung mit einem Server, einer EDV-Anlage, einem Personalcomputer, in dem die Programme bzw. Einstellwerte gespeichert sind, kabelgebunden oder kabellos verbunden wird, die ausgewählten Werte übernommen werden und anschließend die Einstellvorrichtung die gewünschte Position einstellt.

Ein weiterer Aspekt des erfindungsgemäßen Verfahrens ist dadurch angegeben, daß die Einstellvorrichtung das einstellbare Element mittels wenigstens eines Identifizierungsmittels erkennt, aus der Steuerung den oder die Werte für die Einstellung aufruft und danach die Position des Elementes einstellt.

In diesem Zusammenhang wird insbesondere darauf hingewiesen, daß alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Erfindung und zur Offenbarung.

Eine weitere Variante des erfindungsgemäßen Verfahrens zeichnet sich dadurch aus, daß über ein Bedienfeld der Einstellvorrichtung die Positions- und Maßwerte für das Element eingegeben werden und die Einstellvorrichtung anschließend die gewählte Position einstellt und gegebenenfalls als neuen Wert bzw. neues Programm in der Steuerung hinterlegt.

Nach einer Variante des erfindungsgemäßen Verfahrens ist es auch vorgesehen, daß über Eingaben in das Bedienfeld der Einstellvorrichtung, bevorzugt über Pfeiltasten kleinere Korrekturen vorgenommen werden, anhand derer die Einstellvorrichtung die Position des Elementes einstellt.

Erfindungsgemäß wurde gefunden, daß es entsprechend einer bevorzugten Variante des Verfahrens günstig ist, wenn über manuell betätigbare Einstellmittel der Einstellvorrichtung, z.B. durch eine an dem Verbindungsgegenstück vorgesehene Kurve unter Einbeziehung einer zweiten Meßanordnung, z.B. eines zweiten Drehgebers der Bearbeitungsmaschine oder des Motors unter Einbeziehung der ersten Meßanordnung, z.B. des ersten Drehgebers der Einstellvorrichtung, die gewählte bzw. gewünschte Element- bzw. Achsposition eingstellt wird, wobei bevorzugt die in der Anzeige des Bedienfeldes angezeigten Absolut- oder Inkrementalwerte für die Einstellung verwendet werden.

Ein Verfahren, wie zuvor beschrieben, zeichnet sich in einer Weiterbildung dadurch aus, daß eine an der eingestellten Achse vorgesehene zweite Meßanordnung, z.B. ein zweiter Drehgeber, oder ein lineares Meßsystem der Bearbeitungsmaschine als Positionssensor verwendet wird und die erste Meßanordnung, z.B. der erste Drehgeber der Steuerung, das für die genaue Geschwindigkeitsregelung notwendige Tachosignal liefert.

Erfindungsgemäß ist es weiterhin vorgesehen, daß ein Sensor Markierungen an dem Verbindungsgegenstück zur Einstellvorrichtung abtastet und aufgrund der Lage der Markierungen Steuerungssummenfehler erkennt und ausgleicht bzw. anzeigt für eine händische Nachjustierung.

Das Verfahren ist entsprechend einer weiteren Variante der Erfindung dadurch gekennzeichnet, daß für die genaue Positionierung die Einstellvorrichtung zunächst über die Soll-Position hinausgefahren wird, um anschließend auf die genaue Position zurückzufahren. Durch diese Verfahrensweise wird verhindert, daß aufgrund der unterschiedlichen Anfahrweise der Sollposition gegebenenfalls Einstellfehler entstehen.

Die Erfindung wird nachfolgend anhand von Ausführungsbeispielen und Figuren weiter beschrieben.
Es zeigen:

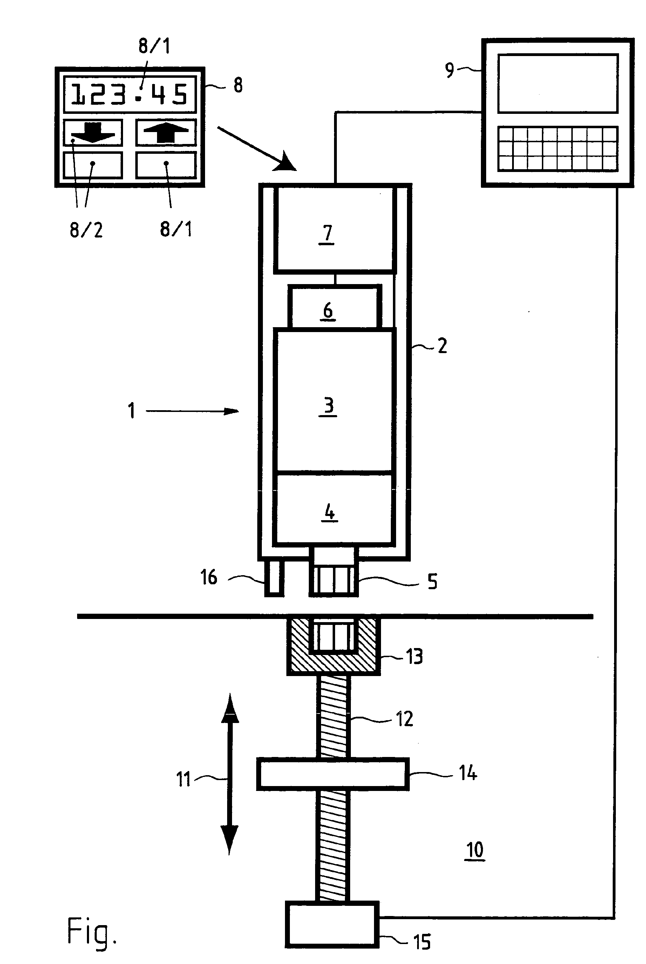

- Figur 1:: Eine schematische Ansicht der erfindungsgemäßen Einstellvorrichtung.

Die Figur 1 zeigt eine schematische Darstellung der erfindungsgemäßen Einstellvorrichtung 1 und deren Positionierung an einem einstellbaren Element, z.B. einer Achse 11 der Bearbeitungsmaschine 10. Die Einstellvorrichtung 1 befindet sich dabei im oberen Teil der Darstellung. Die Einstellvorrichtung 1 selbst ist in einem Gehäuse 2 angeordnet. In diesem Gehäuse befinden sich weiterhin ein erster Drehgeber 6 als Komponente einer ersten Meßanordnung sowie die Steuerung 7. Unter dem Motor 3 ist ein Getriebe 4 vorgesehen, welches den Einstellzapfen 5 antreibt. Dieser Einstellzapfen 5 ist derart ausgebildet, daß er mit der Antriebsmutter 13 der Spindel 12 der Bearbeitungsmaschine 10 zusammenwirkt. Zum Koppeln wird der Einstellzapfen 5 in die Antriebsmutter 13 eingeführt, so daß eine formschlüssige Verbindung entsteht. Ein Zapfen 16, der an dem Gehäuse 2 der Einstellvorrichtung 1 angeordnet ist, sorgt dafür, daß die Einstellvorrichtung 1 immer an einer genau definierten Stelle der Bearbeitungsmaschine 10 positioniert werden kann. Dazu greift der Zapfen 16 in eine nicht dargestellte, korrespondierend angeordnete Ausnehmung oder Öffnung an der Bearbeitungsmaschine 10 in der Nähe der Achse 11 ein. Die Achse 11 bezeichnet dabei die Spindel 12 der Bearbeitungsmaschine 10. Die Verstellung der Spindel 12 an der Bearbeitungsmaschine 10 wird durch die Spindelmutter 14 bewirkt. Durch Drehen der Spindel 12 über die Einstellvorrichtung 1 kann so die Spindelposition eingestellt beziehungsweise verändert werden. An der Spindel 12 ist auf der Seite, die der Antriebsmutter 13 gegenüber liegt, ein zweiter Drehgeber 15 als Komponente einer zweiten Meßanordnung vorgesehen. Dieser zweite Drehgeber 15 kann beispielsweise auch zu einer Vereinfachung der Einstellvorrichtung 1 genutzt werden, indem dort der erste Drehgeber nicht notwendig ist. Der zweite Drehgeber kann allerdings auch dafür verwendet werden, um sozusagen als Positionsanzeige für die Stellung der Spindel 12 zu wirken, während der erste Drehgeber der Einstellvorrichtung 1 sozusagen als Tachometer für die Bestimmung der Geschwindigkeit des Einstellvorganges genutzt wird. Darauf wird später noch einmal genauer eingegangen. An dem Gehäuse 2, beziehungsweise korrespondierend dazu an der Bearbeitungsmaschine 10, können Fixierungsmittel vorhanden sein, die für eine Fixierung der Einstellvorrichtung 1, zumindest während des Einstellvorganges sorgen. Dies können zum Beispiel magnetische Mittel sein. Dies kann allerdings auch durch einen Reibschluß, durch Keilverbindungen oder dergleichen erreicht werden. Hier ist die Erfindung in keinster Weise eingeschränkt.

Im oberen Bereich der Abbildung der Figur 1 ist das Bedienfeld 8 ebenfalls schematisch dargestellt. Das Bedienfeld 8 besitzt dabei Bedien- und Anzeigeelemente. Die Anzeigeelemente tragen das Bezugszeichen 8/1 und die Bedienelemente das Bezugszeichen 8/2. Das Bedienfeld läßt sich dabei von einer absoluten Wertanzeige in eine Inkrementalanzeige umschalten. Die Steuerung 7 der Einstellvorrichtung 1 ist mit einer Zentralsteuerung 9 verbunden. Über diese Zentralsteuerung 9 können die vorhandenen Werte für die Positionierung der Spindel 12 beispielsweise abgerufen werden. In umgekehrter Weise ist es jedoch auch möglich, bestimmte Einstellungen, die händisch oder mittels der Einstellvorrichtung 1 vorgenommen werden, als neue Positionen beziehungsweise Programme zu speichern. Die Verbindung zur Zentralsteuerung 9 ist allerdings nicht erforderlich, da die Steuerung 7 der Einstellvorrichtung 1 diese Aufgabe auch allein meistern kann, beispielsweise, wenn die Steuerung 7 mit einem ausreichenden Speicher versehen ist, in dem die Werte entsprechend hinterlegt und gespeichert werden können.

Die Zentralsteuerung 9 dient unter anderem dazu, eine computerintegrierte Produktion (CIM) zu realisieren. Die Zentralsteuerung 9 kann sowohl eine übergeordnete Steuerung 7 für eine Bearbeitungsmaschine 10 sein, als auch eine übergeordnete Steuerung 7 für mehrere Bearbeitungsmaschine 10. Es können sowohl die vorhandenen eingestellten Werte an der jeweiligen Spindel 12 abgerufen werden, als auch Sollwerte für eine bestimmte Spindel 12 an der Bearbeitungsmaschine 10 vorgegeben werden. Praktischerweise erkennt die Einstellvorrichtung 1, beispielsweise mittels einer aus dem Stand der Technik bekannten Codierung, automatisch, welche vorher definierte Spindel 12 abzufragen beziehungsweise einzustellen ist. Da die Steuerung 7 im Wesentlichen zur Ansteuerung einer endlichen beziehungsweise begrenzten Spindelanzahl fähig ist, dient die Zentralsteuerung 9 dazu, die einstellbare Spindelanzahl von verschiedenen Bearbeitungsmaschinen deutlich zu erhöhen, indem die relevanten Einstelldaten kurzfristig und schnell zur Verfügung gestellt werden können beziehungsweise an die Zentralsteuerung 9 auch wieder abgegeben werden können. Als Zentralsteuerung dient dabei zum Beispiel auch die zentrale Steuerung einer (gegebenenfalls auch komplexen) Bearbeitungsmaschine.

Zur Einstellung der Spindel 12 wird die Einstellvorrichtung 1 über Einstellzapfen 5 und Antriebsmutter 13 gekoppelt. Der Zapfen 16 sorgt dabei gleichzeitig für eine Drehmomentsabstützung für die Einstellbewegung, die vom Motor über das Getriebe initiiert wird. Die einzustellende Position wird entweder von der Steuerung 7 oder der Zentralsteuerung 9 abgerufen oder aber auch durch Eingabe in die Bedienelemente 8/2 am Bedienfeld 8 eingegeben. Ist dies erfolgt, steuert die Steuerung 7 über den ersten Drehgeber 6 den Motor 3 an. Die Drehbewegung des Motors 3 wird über das Getriebe 4 und den Einstellzapfen beziehungsweise die Antriebsmutter 13 auf die Spindel 12 übertragen und so die gewählte Position, respektive der Achse 11, eingestellt.

Nach der Einstellung der Spindel 12 kann diese nochmals über an der Bearbeitungsmaschine 10 vorhandene Meßeinrichtungen überprüft und gegebenenfalls von Hand oder mittels der Einstellvorrichtung 1 nachjustiert werden. Ist die Justierung erfolgt, kann die Einstellvorrichtung 1 von der Bearbeitungsmaschine 10 wieder abgenommen werden. Der Vorteil dieser erfindungsgemäßen Vorrichtung, mit der die Verfahrensschritte wie zuvor beschrieben durchgeführt werden können, besteht darin, daß die Bearbeitungsmaschine 10 selbst einfacher ausgeführt werden kann, indem Positionierantriebe für Spindel 12n, Anschläge, Tische und so weiter, eingespart werden können. Dazu sind lediglich entsprechende Verbindungsstellen für den Anschluß der erfindungsgemäßen Einstellvorrichtung 1 vorzusehen und die Achsen beziehungsweise Positionen lassen sich der Reihe nach sowohl automatisch als auch halbautomatisch auf die gewünschten Positionen, auch anhand entsprechend in der Steuerung 7 hinterlegter Programme, einstellen.

Bei der Erfindung handelt es sich um eine portable Einstellvorrichtung 1, mit der die einstellbaren Elemente, z.B. der Achse, insbesondere alle zu verstellenden Achsen auf eine definierte Position eingestellt werden können, in denen die Einstellvorrichtung 1 an jeder einzustellenden Achse separat angekoppelt wird. Die Einstellvorrichtung 1 besteht dabei aus einem Gehäuse 2, in dem ein Motor mit angeflanschtem Getriebe und daran befindlichen Einstellzapfen 5 untergebracht sind. An der Rückseite des Motors 3 ist ein Drehgeber 6 angeflanscht, der mit einer Steuerung 7 verbunden ist. Die Steuerung 7 ist weiterhin verbunden mit dem Motor 3 und weist ein außerhalb des Gehäuses angeordnetes Bedienfeld 8 auf. Die Einstellvorrichtung 1 ist entweder drahtlos oder drahtgebunden mit einer Zentralsteuerung 9, einer EDV-Anlage, einem Computer oder dergleichen verbunden.

Im Falle einer drahtlosen Verbindung befindet sich in der Einstellvorrichtung 1 eine in der Figur 1 nicht dargestellte Energiequelle. Diese Energiequelle kann beispielsweise durch einen Akkumulator angegeben sein.

Da die Einstellvorrichtung 1 von Hand transportiert wird und einfach und schnell an die Achsen angekoppelt werden muß, ist sie vorteilhafterweise entsprechend einer möglichen Ausführungsform möglichst klein und leicht gebaut und griffgünstig ausgestaltet.

Die Verfahrensweise der Einstellung wird nachfolgend anhand von Beispielen beschrieben. Dabei wird jeweils auf die Bezugsziffern der Figur 1 zurückgegriffen.

In der Maschine 10 soll beispielsweise die Achse 11 positioniert werden. Die Achse besteht in diesem Beispiel aus einer Spindel 12, die über die Spindelmutter 14 die Positionieraufgabe ausführt, sowie einer Antriebsmutter 13. Vor dem Einstellvorgang wird beispielsweise das einzustellende Programm an der Zentralsteuerung 9 oder, wenn vorhanden, aus der Steuerung 7 der Einstellvorrichtung 1 ausgewählt. Der Einstellvorgang wird dann ausgeführt, indem die Einstellvorrichtung 1 mit dem Einstellzapfen 5 in die entsprechende Ausformung der Antriebsmutter 13 eingeführt und damit gekoppelt wird. Der Einstellzapfen 5 und die Antriebsmutter 13 sind dabei vorzugsweise formschlüssig, beispielsweise durch einen Sechskant, so ausgeführt, daß die Drehbewegung des Einstellzapfens 5 sicher und mit möglichst wenig Spiel auf die Antriebsmutter 13 übertragen wird. Die Einstellvorrichtung 1 und die Bearbeitungsmaschine 10 weisen weiterhin Mittel auf, damit die Einstellvorrichtung 1 nur an einer genau definierten Position gekoppelt werden kann, beispielsweise einen leicht kegelförmigen Zapfen 16, der in eine entsprechende, in der Figur 1 nicht gezeigte Ausformung der Bearbeitungsmaschine 10 eingreift. Der Zapfen 16 dient dabei gleichzeitig auch als Drehmomentabstützung für den Einstellvorgang. Selbstverständlich sind auch andere, gegebenenfalls miteinander kombinierte form- und/oder reibschlüssige Lösungen für die exakte Koppelung und Drehmomentabstützung möglich. Dies sind beispielsweise Nuten, Verzahnungen, Reibflächen oder dergleichen.

Mit einem ebenfalls in der Figur 1 nicht gezeigten Fixiermechanismus wird die Einstellvorrichtung 1 während des Einstellvorganges fest und vorzugsweise unlösbar, zumindest während des Einstellvorganges selbst, mit der Bearbeitungsmaschine 10 verbunden, vorzugsweise ohne daß dazu Tätigkeiten beziehungsweise Aktionen vom Bediener notwendig sind. Dieser Fixiermechanismus kann beispielsweise magnetisch oder formschlüssig, beispielsweise durch ausfahrbare Zapfen, einen drehbaren Schlüssel oder reibschlüssig durch Keilklemmung erfolgen.

Es sind weiterhin in Figur 1 nicht gezeigte Mittel an einer möglichen Variante der erfindungsgemäßen Vorrichtung vorhanden, mittels derer die Einstellvorrichtung 1 die angekoppelte Achse 11 erkennen kann. Dies kann beispielsweise durch einen Transponder angegeben sein, der unmittelbar neben der Antriebsmutter 13 in der Maschine angeordnet ist und über einen entsprechenden Empfänger in der Einstellvorrichtung 1 abgefragt wird. Im einfachsten Fall kann die angekoppelte Achse 11 auch an der Einstellvorrichtung 1 beziehungsweise an dem Bedienfeld 8, beispielsweise über die Pfeiltasten eingegeben werden.

Nach der Kopplung der Einstellvorrichtung 1 an die Bearbeitungsmaschine 10 kann durch eine entsprechende Taste am Bedienfeld der Positioniervorgang gestartet werden.

Der Motor 3 bewegt jetzt Getriebe 4, Einstellzapfen 5, Antriebsmutter 13, Spindel 12 und die Spindelmutter 14 mit allen daran befindlichen Elementen der Bearbeitungsmaschine 10. Über den Drehgeber 6 positioniert die Steuerung 7 auf einen Wert, der aus einem von der Zentralsteuerung 9 beziehungsweise von der Steuerung 7 für die entsprechende Achse vergebenen Sollwert errechnet wurde.

Für kleinere Korrekturen können auch die Eingabefelder, zum Beispiel Pfeiltasten am Bedienfeld 8, dazu verwendet werden, um die Achse im sogenannten "Tipbetrieb" zu verfahren. Gegebenenfalls kann die so angefahrene Position dann auch als Sollwert in die Steuerung 7 beziehungsweise in die Zentralsteuerung 9 übernommen werden.

In einer weiteren Ausgestaltung der Erfindung ist auch ein Handrad an der verlängerten Achse des Motors 3 vorgesehen, über die dieser, unter Einbeziehung des Drehgebers 6, manuell gedreht werden kann. Sehr nützlich für derartige manuelle Korrekturen ist dabei eine Umschaltmöglichkeit der Anzeige im Bedienfeld 8 zwischen einer Absolut- und einer Inkrementalanzeige.

Die Bedienperson hat dabei keinen Einfluß auf die angefahrene Position oder die Geschwindigkeit der Positionierung. Das Verfahren ist damit sehr sicher gegen Fehlbedienung. Da die Steuerung 7 beziehungsweise die Zentralsteuerung 9 von jedem der Einstellvorgänge Kenntnis hat, kann sie auch prüfen, ob alle einzustellenden Achsen korrekt positioniert wurden.

Bei häufigen Verstellungen und/oder geringfügigen Eigenbewegungen der Antriebsmutter 13, beispielsweise aufgrund von Erschütterungen, können bei diesem Verfahren auch Summenfehler entstehen.

Dieser Erscheinung kann auf zwei Wegen begegnet werden:
- 1.: An jeder Achse 11 wird an die Spindel 12 ein weiterer, zweiter Drehgeber 15 angeflanscht. Dazu kann selbstverständlich auch ein lineares Meßsystem verwendet werden. Dieser zweite Drehgeber 15 wird von der Steuerung 7 oder von der Zentralsteuerung 9 als ausschlaggebender Positionssensor verarbeitet, während der erste Drehgeber 6 das für die genaue Geschwindigkeitssteuerung notwendige Tachosignal liefert. Auf den ersten Drehgeber 6 kann dann bei entsprechender technischer Ausgestaltung, zumindest bei der Übertragungsgeschwindigkeit einer drahtgebundenen Verbindung zwischen Steuerung 7 und Zentralsteuerung 9, auch verzichtet werden. Ein Vorteil dieser Variante ist die Möglichkeit, schnelle Korrekturen durch eine direkt an die Antriebsmutter 13 angekoppelte Kurbel vornehmen zu können, wobei die geänderte Position der Zentralsteuerung 9 durch den zweiten Drehgeber 15 zur Verfügung gestellt wird.
- 2.: An der Zylinderfläche der Antriebsmutter 13 sind in unregelmäßigen Abständen mehrere Markierungen angebracht. Diese Markierungen werden mittels eines im Zapfen 16 untergebrachten Sensors abgetastet. Die Abstände zwischen den einzelnen Markierungen sind dabei derart unterschiedlich, daß beim Überfahren von zwei Markierungen mit dem Drehgeber 6 eine eindeutige Erkennbarkeit der Winkelstellung der Antriebsmutter 13 gegeben ist. Die Steuerung 7 ist damit in der Lage, Summenfehler und geringe Eigenbewegungen der Antriebsmutter 13 zu korrigieren. Die Eigenbewegungen der Antriebsmutter 13 müssen dabei deutlich unter einer halben Umdrehung bleiben, was in der Praxis auch gegeben ist. Bei dieser Ausgestaltung ist der zweite Drehgeber 15 nicht notwendig.
Schon um das Spiel zwischen Spindelmutter 14 und der Spindel 12 auszuschließen, ist es vorteilhaft, stets von einer Seite zu positionieren. Gegebenenfalls ist es zum Beispiel notwendig, zunächst über die Soll-Position geringfügig hinauszufahren und dann auf die genaue Position zurückzufahren. Mit dieser Verfahrensweise gelingt es, Positionierfehler aufgrund des Spiels zwischen Spindelmutter und Spindel auszuschließen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Einstellvorrichtung zur Einstellung der Maße von durch Stellmittel einstellbaren Elementen einer Bearbeitungsmaschine, insbesondere einer Holzbearbeitungsmaschine, wobei die Einstellvorrichtung eine Steuerung (7) sowie ein Stellelement aufweist und das Stellelement durch ein Verbindungselement auf das Stellmittel des Elementes einzuwirken vermag.

2. Einstellvorrichtung nach Anspruch 1, **dadurch gekennzeichnet, dass** das Stellelement linear oder rotatorisch wirkt, wobei insbesondere das Stellelement als durch einen Motor (3) angetriebene Stellwelle ausgebildet ist, wobei bevorzugt die Einstellvorrichtung portabel ist und/oder die Einstellvorrichtung an das jeweilige Element anschließbar ist, um im Bedarfsfall das Maß einzustellen und/oder zu kontrollieren.

3. Einstellvorrichtung nach einem oder beiden der vorhergehenden Ansprüche, **dadurch gekennzeichnet, dass** der Motor (3) mit wenigstens einer ersten Meßanordnung, bevorzugt einem ersten Drehgeber (6) bzw. durch ein lineares Meßsystem angegeben ist bzw. mit diesem zusammenwirkt, wobei insbesondere die erste Meßanordnung, z.B. durch den ersten Drehgeber (6) mit der Steuerung (7) verbunden ist und die Steuerung bevorzugt aufgrund der Information der ersten Meßanordnung und der Steigung der als Stellspindel ausgebildeten Stellmittel Positionsdaten ermittelt.

4. Einstellvorrichtung nach einem oder mehreren der vorhergehenden Ansprüche, **dadurch gekennzeichnet, dass** ein Getriebe (4) vorgesehen ist, welches vorzugsweise an den Motor (3) angeflanscht ist und zur Einstellung bzw. Regelung der Drehgeschwindigkeit für den Einstellvorgang dient, wobei bevorzugt die Steuerung (7), die erste Meßanordnung bzw. der erste Drehgeber (6) oder das lineare Meßsystem, der Motor (3) sowie das Getriebe (4) in einem Gehäuse (2) angeordnet sind.

5. Einstellvorrichtung nach einem oder mehreren der vorhergehenden Ansprüche, **dadurch gekennzeichnet, dass** die Einstellvorrichtung über eine Schnittstelle mit der Zentralsteuerung (9) der Bearbeitungsmaschine (10) verbindbar ist und insbesondere die Schnittstelle in der Steuerung (7) vorgesehen ist und die Steuerung (7) mit der Zentralsteuerung (9) drahtlos oder drahtgebunden verbindbar ist.

6. Einstellvorrichtung nach einem oder mehreren der vorhergehenden Ansprüche, **dadurch gekennzeichnet, dass** ein Verbindungselement von dem Stellelement leicht lösbar ausgebildet ist, wobei insbesondere das Verbindungselement zur Verbindung der Vorrichtung mit dem Stellmittel durch einen Einstellzapfen (5) angegeben ist, der mit einem an der Bearbeitungsmaschine (10) vorgesehenen Verbindungsgegenstück, insbesondere einer Antriebsmutter (13), zusammenwirkt und insbesondere das Verbindungselement durch eine Kupplung, insbesondere eine Schnellkupplung angegeben ist, die mit einem Kupplungsstück an der Bearbeitungsmaschine zusammenwirkt.

7. Einstellvorrichtung nach einem oder mehreren der vorhergehenden Ansprüche, **dadurch gekennzeichnet, dass** die Steuerung (7) mit einer zweiten Meßanordnung, bevorzugt einem zweiten Drehgeber (15), oder einem linearen Meßsystem an dem Stellmittel der Bearbeitungsmaschine (10) zusammenzuwirken vermag, wobei vorzugsweise in der Steuerung (7) ein Datenspeicher für die Maße der einzelnen Elemente und/oder Bearbeitungsvorgänge, Programme bzw. Varianten vorgesehen ist, wobei insbesondere als einstellbare Elemente Achspositionen, Werkzeuge, Anschläge, Lineale, Bearbeitungstische oder dergleichen vorgesehen sind und/oder die Werte der Elemente durch die Einstellvorrichtung (1) bzw. die Steuerung (7) von der Zentralsteuerung (9) der Bearbeitungsmaschine (10) abrufbar und ggf. speicherbar sind und/oder das Stellmittel durch die Spindel (12) der Bearbeitungsmaschine (10) angegeben ist.

8. Einstellvorrichtung nach einem oder mehreren der vorhergehenden Ansprüche, **dadurch gekennzeichnet, dass** ein Bedienfeld (8) vorgesehen ist, über das die Vorrichtung bedien- bzw. steuerbar ist und insbesondere das Bedienfeld (8) Anzeigefelder (8/1) und/oder Stellfelder (8/2) aufweist, wobei bevorzugt das Bedienfeld (8) eine Umschaltmöglichkeit der Anzeige zwischen Absolut- und Inkrementalanzeige besitzt.

9. Einstellvorrichtung nach einem oder mehreren der vorhergehenden Ansprüche, **dadurch gekennzeichnet, dass** eine Positionierhilfe an der Einstellvorrichtung vorgesehen ist, über die diese an der Bearbeitungsmaschine (10) bzw. an einem definierten Element feststellbar ist, vorzugsweise die Positionierhilfe durch einen vorzugsweise leicht kegelförmig ausgebildeten Zapfen (16) angegeben ist, der mit einer korrespondierend dazu ausgebildeten Ausformung an der Bearbeitungsmaschine (10) zusammenzuwirken vermag, wobei insbesondere der Zapfen (16) derart ausgebildet ist, dass er gleichzeitig der Kraft- beziehungsweise Drehmomentabstützung für den Einstellvorgang dient und vorzugsweise die Positionierhilfe durch form-und/oder reibschlüssige Verbindungen, wie Nut- und Federverbindungen, Verzahnungen, Reibflächen oder dergleichen für eine exakte Koppelung Kraft- bzw. Drehmomentabstützung angegeben ist, wobei insbesondere ein Fixiermechanismus vorgesehen ist, der die Einstellvorrichtung während des Einstellvorganges mit der Bearbeitungsmaschine fest und zumindest während des Einstellvorgangs unlösbar verbindet und bevorzugt der Fixiermechanismus durch magnetisch bzw. form- oder reibschlüssig wirkende Mittel, wie z.B. Magnetspulen, ausfahrbare Zapfen bzw. Bolzen, drehbare Schlüssel, Keilklemmung oder dergleichen angegeben ist.

10. Einstellvorrichtung nach einem oder mehreren der vorhergehenden Ansprüche, **dadurch gekennzeichnet, dass** Identifizierungsmittel vorgesehen sind, mittels derer die Einstellvorrichtung das Element zu erkennen vermag und vorzugsweise die Einstellvorrichtung ein Lesegerät für das Identifizierungsmittel aufweist, welches mit der Steuerung (7) verbunden ist, wobei insbesondere als Identifizierungsmittel ein Barcode, ein Nummerncode oder ein Transponder vorgesehen ist.

11. Einstellvorrichtung nach einem oder mehreren der vorhergehenden Ansprüche, **dadurch gekennzeichnet, dass** das Stellelement als Stellspindel oder als auf einer Führung geführter Schlitten ausgebildet ist und/oder an dem Gehäuse (2), bevorzugt an oder in dem Zapfen (16) der Einstellvorrichtung ein Sensor vorgesehen ist, der Markierungen am Verbindungselement oder am Stellelement zu erkennen vermag und bevorzugt in der Vorrichtung eine eigene Energiequelle, bevorzugt ein Akkumulator, eine Batterie oder dergleichen, zumindest zur Spannungs- bzw. Stromversorgung der Steuerung und deren Verbindung zur Zentralsteuerung vorgesehen ist.

12. Bearbeitungsmaschine, insbesondere Holzbearbeitungsmaschine, welche mindestens ein durch ein Stellelement einstellbares Element aufweist, wobei das Stellelement ein Verbindungsgegenstück aufweist, welches mit dem Verbindungselement einer Einstellvorrichtung nach einem oder mehreren der vorhergehenden Ansprüche zusammenzuwirken vermag, wobei insbesondere das Verbindungsgegenstück am Kopf der Stellspindel (12) vorgesehen ist, bevorzugt das Verbindungsgegenstück durch eine mit der Spindel (12) verbundene Antriebsmutter (13) angegeben ist, die mit dem Einstellzapfen (5) der Einstellvorrichtung (1) zusammenwirkt, besonders bevorzugt eine Spindelmutter (14) vorgesehen ist, mittels derer die Elementposition einstellbar bzw. verstellbar ist.

13. Bearbeitungsmaschine nach Anspruch 12, **dadurch gekennzeichnet, dass** eine zweite Meßanordnung, bevorzugt ein zweiter Drehgeber (15) an dem Stellmittel, insbesondere der Stellspindel (12) vorgesehen ist, bevorzugt an der gegenüberliegenden Seite der Stellspindel (12), die das Verbindungsgegenstück trägt und/oder das Identifizierungsmittel durch einen Datenträger, insbesondere Transponder angegeben ist, der vorzugsweise unmittelbar an bzw. neben der Achse (11) bzw. der an der Achse vorgesehenen Antriebsmutter (13) angeordnet ist und der mit dem Lesegerät beziehungsweise einem entsprechenden Empfänger an beziehungsweise in der Einstellvorrichtung zusammenwirkt und/oder Markierungen an der Antriebsmutter (13) vorgesehen sind, die durch einen an der Einstellvorrichtung (1) vorgesehenen Sensor erkennbar und gegebenenfalls an die Steuerung weiterleitbar sind und bevorzugt die Markierungen an der Antriebsmutter oder an dem Stellelement mit unterschiedlichen Abständen zueinander angeordnet sind und/oder eine Kurbel zur Betätigung des Stellelementes vorgesehen ist, die bevorzugt an dem Verbindungselement bzw. an der Antriebsmutter (13) vorgesehen ist.

14. Verfahren zur Einstellung bzw. Verstellung des Maßes bzw. der Position von Elementen einer Bearbeitungsmaschine, insbesondere einer Bearbeitungsmaschine nach einem oder beiden der Ansprüche 12 und 13, wobei die Einstellung anhand von in einer Steuerung speicherbaren, einlesbaren, hinterlegbaren bzw. hinterlegten und von dort abrufbaren Einstellwerten bzw. Programmen erfolgt, **dadurch gekennzeichnet, dass** eine von der Bearbeitungsmaschine trennbare Einstellvorrichtung, insbesondere eine Einstellvorrichtung nach einem oder mehreren der Ansprüche 1 bis 11 an die Bearbeitungsmaschine angeschlossen, ein Programm bzw. entsprechende Einstellwerte ausgewählt und von der Steuerung aufgerufen wird bzw. werden und die Einstellvorrichtung anschließend die ausgewählte Position des Elementes einstellt.

15. Verfahren nach Anspruch 14, **dadurch gekennzeichnet, dass** durch die Einstellvorrichtung zunächst die Position bzw. das Maß eines ersten Elementes einstellbar ist, hernach die Einstellvorrichtung an dem ersten Element ab- und an einem zweiten Element angebaut wird, um auch die Position bzw. das Maß des zweiten Elementes einzustellen, wobei insbesondere die Einstellvorrichtung bzw. deren Steuerung mit der Zentralsteuerung der Bearbeitungsmaschine kabelgebunden oder kabellos verbunden, das Programm bzw. die Einstellwerte von dort ausgewählt und übernommen wird bzw. werden, und anschließend die Einstellvorrichtung die gewünschte Position einstellt, vorzugsweise die Einstellvorrichtung bzw. deren Steuerung mit einem Server einer EDV-Anlage, einem Personalcomputer, in dem die Programme bzw. Einstellwerte gespeichert sind, kabelgebunden oder kabellos verbunden wird, die ausgewählten Werte übernommen werden und anschließend die Einstellvorrichtung die gewünschte Position einstellt, bevorzugt die Einstellvorrichtung das einstellbare Element mittels wenigstens eines Identifizierungsmittels erkennt, aus der Steuerung den oder die Werte für die Einstellung aufruft und danach die Position des Elementes einstellt, wobei insbesondere über ein Bedienfeld der Einstellvorrichtung die Positions- und Maßwerte für das Element eingegeben werden und die Einstellvorrichtung anschließend die gewählte Position einstellt und ggf. als neuen Wert bzw. neues Programm in der Steuerung hinterlegt.

16. Verfahren nach einem oder beiden der vorhergehenden Ansprüche 14 und 15, **dadurch gekennzeichnet, dass** über Eingaben in das Bedienfeld der Einstellvorrichtung, bevorzugt über Pfeiltasten, kleinere Korrekturen vorgenommen werden, anhand derer die Einstellvorrichtung die Position des Elementes einstellt, wobei vorzugsweise über manuell betätigbare Einstellmittel der Einstellvorrichtung, zum Beispiel durch eine an dem Verbindungsgegenstück vorgesehene Kurbel unter Einbeziehung einer zweiten Meßanodnung, z.B. eines zweiten Drehgebers der Bearbeitungsmaschine oder des Motors unter Einbeziehung der ersten Meßanordnung, z.B. des ersten Drehgebers der Einstellvorrichtung, die gewählte bzw. gewünschte Element- bzw. Achsposition eingestellt wird, wobei bevorzugt die in der Anzeige des Bedienfeldes angezeigten Absolut- oder Inkrementalwerte für die Einstellung verwendet werden, insbesondere eine an der einzustellenden Achse vorgesehene zweite Meßanordnung, z.B. ein zweiter Drehgeber oder ein lineares Messsystem der Bearbeitungsmaschine als Positionssensor verwendet wird und die erste Meßanordnung, z.B. der erste Drehgeber der Steuerung das für die genaue Geschwindigkeitsregelung notwendige Tachosignal liefert und/oder ein Sensor Markierungen an dem Verbindungsgegenstück zur Einstellvorrichtung abtastet und aufgrund der Lage der Markierungen die Steuerung Summenfehler erkennt und ausgleicht, bzw. anzeigt für eine händische Nachjustierung und bevorzugt für die genaue Positionierung die Einstellvorrichtung zunächst über die Soll-Position hinausgefahren wird, um anschließend auf die genaue Position zurückzufahren.

17. System für die Einstellung der Maße von durch Stellmittel einstellbaren Elementen einer Bearbeitungsmaschine mit einer portablen Einstellvorrichtung nach einem oder mehreren der vorhergehenden Ansprüche und Verbindungselementen, mittels dessen neue Bearbeitungsmaschinen ausrüstbar und ältere Bearbeitungsmaschinen nachrüstbar sind, wobei autarke Bestandteile des Systems für die Einstellung der Elemente zusammenwirken.
